# EUROPÄISCHE PATENTSCHRIFT

(11) **EP 1 366 653 B1**
(45) Veröffentlichungstag und Bekanntmachung des Hinweises auf die Patenterteilung: **25.06.2008**
(21) Anmeldenummer: 03450124.7
(22) Anmeldetag: 20.05.2003
(51) Int. Cl.: A01D 75/20, A01D 34/63

(54) **Kreiselmähwerk**
Rotary mower
Faucheuse rotative

(30) Priorität: 21.05.2002 AT 7702002
(43) Veröffentlichungstag der Anmeldung: 03.12.2003
(73) Patentinhaber: Prillinger, Karl, 4600 Wels (AT)
(72) Erfinder: Prillinger, Karl, 4600 Wels (AT)
(74) Vertreter: Hübscher, Helmut

(56) Entgegenhaltungen:
- DE-A- 3 328 537
- DE-A- 4 205 291
- GB-A- 1 466 065
- US-A- 3 015 927

## Beschreibung

Die Erfindung bezieht sich auf ein Kreiselmähwerk mit in einem Gestell gelagerten, Mähmesser aufweisenden Rotoren und mit einer am Gestell angeordneten, den Mähbereich abschirmenden Schürze.

Kreiselmähwerke mit mehreren in einem Gestell zu einem Mähbalken zusammengefaßten Rotoren, beispielsweise Scheiben oder Trommeln, werden üblicherweise mit Hilfe einer am Gestell angeordneten Schürze nach außen abgeschirmt, die einerseits ein fliehkraftbedingtes Wegschleudern des Schnittgutes verhindert und anderseits den freien Zugang zu den mit Mähmessern bestückten Rotoren sperrt. Ein Messerbruch stellt jedoch trotz der Schürze ein Sicherheitsrisiko dar, weil das fliehkraftbedingt von den Rotoren abgeschleuderte Bruchstück des Messers die Schürze im wesentlichen ungebremst durchschlagen kann. Als Schürzen werden ja Planen eingesetzt, die weder den Eintritt des zu schneidenden Halmgutes in den Mähbereich noch den Austritt des geschnittenen Gutes aus dem Mähbereich nachhaltig beeinträchtigen dürfen.

Um bei Rasentrimmern mit einem eine Schneidschnur aufweisenden Rotor den Benützer vor von der Schneidschnur abgeschleuderten Grasteilchen und kleinen Steinen zu schützen, ist es bekannt (US 5 924 205 A), dem Rotor auf der dem Benützer zugekehrten Rückseite eine Schürze zuzuordnen, die zur besseren Anpassung an Bodenunebenheiten aus durch vertikale Schlitze voneinander getrennten, biegeelastischen Lamellen besteht. Aufgrund der Unterteilung der Schürze in einzelne, biegsame Lamellen besteht die Gefahr, daß die Lamellen durch die Schneidschnur beschädigt werden. Zur Vermeidung einer solchen Beschädigungsgefahr werden daher wenigstens zwei Reihen von hintereinander angeordneten Lamellen vorgesehen, von denen die dem Rotor zugekehrten Lamellen eine Verstärkung aufweisen und beispielsweise aus einem faserverstärktem Kunststoff oder dünnen Blechen bestehen. Diese Verstärkung zum Schutz vor einer Lamellenbeschädigung ist jedoch nicht geeignet, abgebrochene Messerstücke aufzufangen, wie sie aufgrund eines Messerbruchs bei Kreiselmähwerken auftreten können, zumal die Schlitze in der Schürze gerade in einem bodennahen Randstreifen teilweise erheblich auseinanderklaffen.

Schließlich ist es bekannt (DE 42 05 291 A1), Die Seitenteile einer ein Kreiselmähwerk umschließenden Schutzeinrichtung aus einem widerstandsfähigen, starren Material, z. B. Stahl, Aluminium oder faserverstärktem Kunststoff, herzustellen und schwenkbar zu lagern, um einerseits eine Anpassung an Bodenunebenheiten zu ermöglichen und anderseits eine Prallplatte zu erhalten, die auch Teile mit einer hohen Bewegungsenergie aufzuhalten vermag. Nachteilig ist nicht nur das vergleichsweise hohe Gewicht einer solchen Schutzeinrichtung, sondern vielmehr der Umstand, daß der Schutz vor abfliegenden Teilen nur nach der Seite hin gegeben sein kann.

Der Erfindung liegt somit die Aufgabe zugrunde, ein Kreiselmähwerk der eingangs geschilderten Art so auszugestalten, daß das Sicherheitsrisiko beim Bruch eines Messers eines Rotors mit einfachen konstruktiven Mitteln kleingehalten werden kann, ohne die Funktion des Kreiselmähwerkes zu beeinträchtigen.

Die ErFndung löst die gestellte Aufgabe dadurch, daß die Schürze im Bereich eines bodenseitigen Randstreifens eine einen Splitterschutz bildende Verstärkung aufweist.

Durch den zufolge dieser Maßnahme in einem bodenseitigen Randstreifen der Schürze gegebenen Splitterschutz wird das Durchschlagen der Schürze durch Messerbruchstücke wirksam verhindert, die bei einem Messerbruch fliehkraftbedingt von einem Rotor abgeschleudert werden können. Wegen der zur Umlaufbahn der Messer tangentialen Abflugrichtung der Messerbruchstücke kann der Splitterschutz auf einen vergleichsweise schmalen Randstreifen beschränkt werden, so daß trotz der den Splitterschutz bedingenden Verstärkung der Schürze der Zutritt des Halmgutes in den Mähbereich und der Austritt des geschnittenen Gutes aus dem Mähbereich des Kreiselmähwerkes kaum behindert wird.

Der Konstruktionsaufwand für einen solchen Splitterschutz bleibt gering, insbesondere wenn die Verstärkung der Schürze aus einer Beschichtung aus faserverstärktem Kunststoff besteht, weil in diesem Fall die Schürze selbst als Träger für die Verstärkung dient und daher am Kreiselmähwerk keine konstruktiven Änderung vorgenommen werden müssen. Bei einer geeigneten Wahl der Verstärkungsfasern kann eine im wesentlichen schnittfeste Beschichtung als Verstärkung erreicht werden, die die für die Schürzenfunktion erforderliche Biegeweichheit der Schürze sicherstellt und einen vollen Splitterschutz gewährleistet. Eine andere Möglichkeit, die Schürze für einen Splitterschutz zu verstärken, besteht darin, die Verstärkung der Schürze aus einem Draht- oder Kunststoffgeflecht herzustellen, das an der Schürze angebracht oder in die Schürze eingebettet wird. Anstelle eines Geflechtes kann auch ein Kettenvorhang treten, der auf der den Mähscheiben zugekehrten Seite der Schürze vorgesehen wird, um von einer Mähscheibe abgeschleuderte Bruchstücke eines Messers abzufangen. Die Form der Verstärkung kann unterschiedlich ausfallen, weil es ja lediglich darum geht, das Durchschlagen der Schürze durch Messerbruchstücke zu vermeiden, die fliehkraftbedingt von den Rotoren abgeschleudert werden.

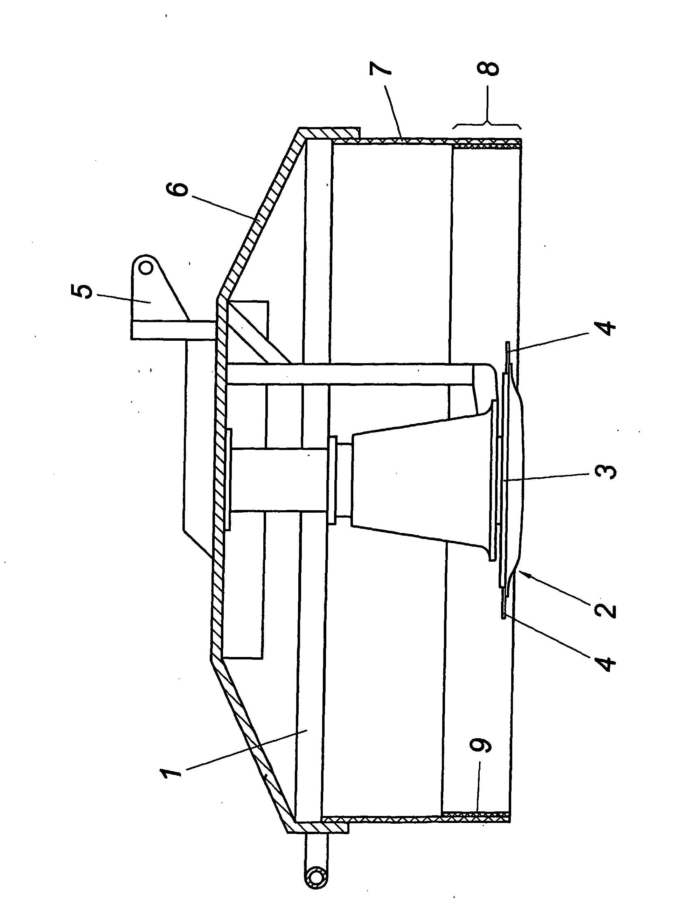

In der Zeichnung ist der Erfindungsgegenstand beispielsweise dargestellt, und zwar wird ein erfindungsgemäßes Kreiselmähwerk in einem schematischen Querschnitt gezeigt.

Gemäß dem dargestellten Ausführungsbeispiel weist das Kreiselmähwerk ein Gestell 1 auf, das einen Mähbalken 2 trägt. Dieser Mähbalken 2 ist mit mehreren quer zur Vorschubrichtung nebeneinandergereihten Rotoren 3 ausgerüstet, die um im wesentlichen vertikale Achsen angetrieben werden und über ihren Umfang verteilte Mähmesser 4 tragen.

Das Gestell 1, das in herkömmlicher Weise über eine Anbaueinrichtung 5 beispielsweise an einen Traktor angeschlossen wird, trägt eine Abdeckung 6, von der eine Schürze 7 nach unten vorsteht, die in der Arbeitsstellung des Mähwerkes knapp oberhalb des Bodens endet und den Mähbereich des Mähbalkens 2 umschließt. Im Gegensatz zu herkömmlichen Schürzen weist die erfindungsgemäße Schürze 7 im Bereich eines bodenseitigen Randstreifens 8 eine Verstärkung 9 auf, die einen Splitterschutz darstellt, um beim Bruch eines Mähmessers 4 das Durchschlagen der Schürze 7 durch ein fliehkraftbedingt von einem Rotor 3 abgeschleudertes Messerbruchstück zu verhindern. Die Verstärkung 9 kann unterschiedlich aufgebaut sein. Eine vorteilhafte Verstärkung 9 besteht aus einer Beschichtung der Schürze 7 in Form eines faserverstärkten Kunststoffes, der aufgrund der Faserverstärkung im wesentlichen schnittfest ausgebildet ist und daher nicht von Messerbruchstücken durchtrennt werden kann.

Eine andere Möglichkeit, eine einen Splitterschutz bildende Verstärkung 9 für die Schürze 7 vorzusehen, besteht darin, die Schürze im Bereich des Randstreifens 8 mit einem Drahtgeflecht zu versehen. Eine weitere Ausgestaltung der Verstärkung 9 ergibt sich, wenn auf der den Rotoren 3 zugekehrten Seite der Schürze 7 ein Kettenvorhang angeordnet wird, der nicht zwangsläufig an der Schürze 7 befestigt werden muß, obwohl eine Anordnung des Kettenvorhanges an der Schürze 7 konstruktive Vorteile mit sich bringt, weil weder das Gestell 1 noch die Abdeckung 6 zur Aufnahme eines solchen Kettenvorhanges eine konstruktive Änderung erfahren müssen.

## Patentansprüche

1. Kreiselmähwerk mit in einem Gestell (1) gelagerten, Mähmesser (4) aufweisenden Rotoren (3) und mit einer am Gestell (1) angeordneten, den Mähbereich abschirmenden Schürze (7), **dadurch gekennzeichnet, daß** die Schürze (7) im Bereich eines bodenseitigen Randstreifens (8) eine einen Splitterschutz bildende Verstärkung (9) aufweist.

2. Kreiselmähwerk nach Anspruch 1, **dadurch gekennzeichnet, daß** die Verstärkung (9) der Schürze (7) aus einer Beschichtung aus faserverstärktem Kunststoff besteht.

3. Kreiselmähwerk nach Anspruch 1, **dadurch gekennzeichnet, daß** die Verstärkung (9) der Schürze (7) aus einem Draht- oder Kunststoffgeflecht besteht.

4. Kreiselmähwerk nach Anspruch 1, **dadurch gekennzeichnet, daß** die Verstärkung (9) aus einem Kettenvorhang auf der den Rotoren (3) zugekehrten Seite der Schürze (7) besteht.

## Claims

1. Rotary mower having rotors (3) mounted in a frame (1) and comprising mower blades (4), and having a skirt (7) disposed on the frame (1) and shielding the mowing region, **characterised in that** the skirt (7) comprises a reinforcement (9) in the region of a ground-side edge trim (8), which reinforcement forms a chip guard.

2. Rotary mower as claimed in Claim 1, **characterised in that** the reinforcement (9) of the skirt (7) consists of a coating of fibre-reinforced synthetic material.

3. Rotary mower as claimed in Claim 1, **characterised in that** the reinforcement (9) of the skirt (7) consists of a wire or synthetic material meshing.

4. Rotary mower as claimed in Claim 1, **characterised in that** the reinforcement (9) consists of a chain screen on the side of the skirt (7) facing the rotors (3).

## Revendications

1. Faucheuse rotative avec des rotors (3) montés en palier dans un bâti (1) et présentant des lames de fauchage (4), et avec un tablier (7) disposé sur le bâti (1) , isolant la zone de fauchage, **caractérisée en ce que** le tablier (1) présente, dans la zone d'une bande de bordure (8) située côté sol, un renforcement (9) formant une protection contre des éclats.

2. Faucheuse rotative selon la revendication 1, **caractérisée en ce que** le renforcement (9) du tablier (7) est composé d'une matière synthétique renforcée par des fibres.

3. Faucheuse rotative selon la revendication 1, **caractérisée en ce que** le renforcement (9) du tablier (7) est composé d'un treillis ou tresse, en fil métallique ou en matière synthétique.

4. Faucheuse rotative selon la revendication 1, **caractérisée en ce que** le renforcement (9) est composé d'un rideau de chaînes, disposé sur le côté du tablier (7), tourné vers les rotors (3).
